# EUROPÄISCHE PATENTANMELDUNG

(11) **EP 1 403 625 A1**
(43) Veröffentlichungstag der Anmeldung: **31.03.2004**
(21) Anmeldenummer: 03020769.0
(22) Anmeldetag: 12.09.2003
(51) Int. Cl.: G01D 18/00, G12B 13/00, G01H 1/00, G01M 19/00

(54) **Kalibriergenerator mit Speicher ( Schwingungsmessung )**

(30) Priorität: 25.09.2002 DE 10244650
(71) Anmelder: SIEMENS AKTIENGESELLSCHAFT, 80333 München (DE)
(72) Erfinder: Völkel, Thomas, 95138 Bad Steben (DE)

(57) **Zusammenfassung**

Für ein Schwingungsmesssystem (2) eines vibroakustischen Prüfsystems (1) wird ein geeignetes Kalibriersystem (10) angegeben, das mit geringem Aufwand bei hoher Genauigkeit eine zuverlässige Kalibrierung auch bei variierenden Prüfbedingungen ermöglicht. Dazu weist das Kalibriersystem (10) einen elektromechanischen Wandler auf, wobei eine diesem zugeordnete Ansteuereinheit eingangsseitig mit einer Speichereinheit verbunden ist.

## Beschreibung

Die Erfindung betrifft ein Kalibriersystem, insbesondere für ein Schwingungsmesssystem.

Bei der Herstellung einer Vielzahl von Produkten wie beispielsweise elektrischen Antrieben, Schaltelementen, Lager, Getrieben, Keramiken oder anderen ist während des Herstellungsprozesses oder nach erfolgter Herstellung eine Qualitätsprüfung vorgesehen. Bei einer derartigen Qualitätsprüfung können alle hergestellten Produkte oder auch stichprobenartig einzelne hergestellte Produkte durch gezielte Messung vorgegebener Parameter daraufhin überprüft werden, ob sie gewisse Toleranzgrenzen oder Mindestanforderungen einhalten. Im Rahmen derartiger Prüfverfahren können auch so genannte vibroakustische Prüfkonzepte zum Einsatz kommen.

Bei einem derartigen vibroakustischen Prüfkonzept wird ein Schwingungssignal des zu überprüfenden Produkts, also beispielsweise das zeitliche Verhalten einer Schwingungsamplitude über ein vorgegebenes Zeitintervall, ermittelt. Das Schwingungssignal, das beispielsweise über Körperschall oder über Luftschall übertragbar sein kann, kann dabei vom Produkt selbst erzeugt sein, beispielsweise bei der Prüfung eines Motors, oder aber auch als Pulsantwort auf einen auf das Produkt gegebenen Testpuls in der Art eines Reflexionssignals vorliegen. Da die Ausprägung eines derartigen Schwingungssignals von vergleichsweise vielen Parametern und Materialeigenschaften des zu untersuchenden Produkts abhängen kann, kann ein derartiges Schwingungssignal vergleichsweise komplex strukturiert und demzufolge sehr aussagekräftig über die Eigenschaften des untersuchten Produkts sein. Im Rahmen der vibroakustischen Prüfung werden derartige Schwingungssignale daher üblicherweise bei einer Vielzahl von Produkten ermittelt und zur Qualitätsanalyse im Hinblick auf vorgegebene Kriterien analysiert, um aussagekräftige Kennwerte über die Qualität des jeweiligen Produkts zu erhalten.

Zur Kennwertbildung bei einer derartigen Analyse werden üblicherweise bestimmte Teile der Analyseergebnisse verwendet. Beispielsweise kann in einem Frequenzspektrum, das von 0 bis 12000 Hz reicht, die Amplitudensumme im Frequenzintervall von 450 bis 520 Hz zur Auswertung kommen. Anhand vorgegebener Schwellwerte und Kombinationen einzelner Kennwerte kann auf der Grundlage des Schwingungssignals das überprüfte Produkt bewertet und in vorgegebene Qualitäts- oder Fehlerklassen eingeteilt werden. Die Zuordnung zu einer bestimmten Qualitäts- oder Fehlerklasse erfolgt dabei üblicherweise im Hinblick auf eine entsprechende Signatur im zugrunde liegenden Schwingungssignal.

Zur Durchführung derartiger vibroakustischer Prüfungen werden Überprüfanlagen eingesetzt, die zur Erfassung der Schwingungssignale geeignete Schwingungsmesssysteme aufweisen. Dabei wird das jeweilige Schwingungsmesssystem, beispielsweise durch Anlegen, in geeigneten Kontakt mit dem zu überprüfenden Produkt gebracht, so dass eine Erfassung des mechanischen Schwingungssignals ermöglicht ist. Vom dazu verwendeten Messkopf des Schwingungsmesssystems aus erfolgt anschließend eine Umsetzung der aufgenommenen mechanischen Signaturen in entsprechende elektrische, insbesondere digitalisierte, Signale, die einer weiteren Auswertung, beispielsweise in einem Rechnersystem, zugeführt werden können.

Zur zuverlässigen Qualitätsanalyse ist eine vergleichsweise genaue Erfassung und Zuordnung der Schwingungssignale erforderlich. Hinderlich hierbei kann insbesondere sein, dass im für die jeweilige Prüfung verwendeten Schwingungsmesssystem aufgrund von Verschleiß, Bauelementendrift, Alterung, Temperatureinflüssen oder ähnlichem Fehler bei der Umsetzung der vom Messkopf erfassten mechanischen Schwingungen in die bei der Weiterverarbeitung zugrunde gelegten elektrischen Signale auftreten können. Derartige Fehler können das Gesamtergebnis der Qualitätsprüfung gravierend verfälschen.

Um derartige Fehler zu vermeiden, ist daher üblicherweise in bestimmten zeitlichen Intervallen eine Kalibrierung und/oder Justierung des Schwingungsmesssystems vorgesehen. Für eine derartige Kalibrierung werden üblicherweise standardisierte Prüfobjekte, die unter vorgegebenen Testbedingungen bekannte Schwingungssignale erzeugen, in der Art von Referenzen den einzelnen Prüfungsschritten unterzogen. Anhand dieser Referenzmessungen wird überprüft, ob das Schwingungsmesssystem tatsächlich das erwartete Schwingungssignal feststellt und dementsprechend die erwartete Klassifizierung des Referenz-Prüfobjekts in die diesem zugeordnete Qualitäts- oder Fehlerklasse vornimmt. Aufgrund des Eich- oder Kalibriercharakters dieser Referenz-Prüfobjekte ist jedoch ein besonders sorgfältiger und damit aufwendiger Umgang mit diesen Objekten erforderlich, damit auch tatsächlich sichergestellt ist, dass diese das erwartete Schwingungssignal unter den vorgegebenen Testbedingungen produzieren. Selbst bei sorgfältiger Behandlung kann jedoch auch bei diesen Referenz-Prüfobjekten eine Alterung auftreten, die zu einer Verfälschung der Referenzsignale führen kann.

Der Erfindung liegt daher die Aufgabe zugrunde, ein Kalibriersystem, insbesondere für ein Schwingungsmesssystem in einer vibroakustischen Prüfanlage, anzugeben, mit dem mit besonders geringem Aufwand und mit hoher Zuverlässigkeit und Genauigkeit als Referenzmuster geeignete Schwingungssignale generiert werden können, die für eine Überprüfung der Funktionsfähigkeit der jeweiligen Schwingungsmesssysteme geeignet sind.

Diese Aufgabe wird erfindungsgemäß gelöst, in dem das Kalibriersystem einen elektromechanischen Wandler aufweist, wobei eine diesem zugeordnete Ansteuereinheit eingangsseitig mit einer Speichereinheit verbunden ist.

Die Erfindung geht dabei von der Überlegung aus, dass eine zuverlässige Kalibrierung der Schwingungsmesssysteme mit hoher Genauigkeit und geringem Aufwand gewährleistet werden kann, indem unter bewusster Abkehr von einer Verwendung von Prüfobjekten zu Kalibrierzwecken eine bedarfsweise direkte Erzeugung eines für die Kalibrierzwecke geeigneten Referenz-Schwingungssignals vorgesehen ist. Dazu umfasst das Kalibriersystem anstelle eines passiven Referenz-Prüfobjekts einen aktiven, zur Erzeugung eines Referenz-Schwingungssignals geeigneten Generator. Dieser Generator ist dafür ausgebildet, das jeweils erforderliche Referenz-Schwingungssignal bedarfsweise zu erzeugen. Um dabei die für die Erzeugung des jeweiligen Referenz-Schwingungssignals charakteristischen Informationen gezielt berücksichtigen zu können, ist der Generator als elektromechanischer Wandler ausgeführt, wobei die zur Erzeugung des mechanischen Referenz-Schwingungssignals vorgesehene elektrische Ansteuerung des Wandlers unter Rückgriff auf eine Speichereinheit erfolgt, in der die für das jeweils benötigte Referenz-Schwingungssignal charakteristischen Informationen hinterlegt sind.

Der elektromechanische Wandler könnte dabei in geeigneter Ausgestaltung, beispielsweise als Schwingspule ausgebildet sein. Für einen besonders einfachen apparativen Aufbau und für eine besonders hohe Genauigkeit und Flexibilität bei der Ansteuerung ist der elektromechanische Wandler jedoch vorzugsweise als piezoelektrisches Element ausgebildet.

Im Hinblick auf die möglicherweise verschiedenartigen Anforderungen bei der Klassifizierung von Produkten in verschiedenartige Qualitäts- oder Fehlerklassen ist das jeweilige vibroakustische Prüfsystem insbesondere für die gezielte Erfassung und Weiterverarbeitung einer Vielzahl verschiedenartiger Schwingungssignale ausgestaltet. Um im Hinblick auf diese Vielzahl denkbarer Signale eine besonders bedarfsangepasste, vielseitige Kalibrierung vornehmen zu können, ist das Kalibriersystem vorteilhafterweise ebenfalls für die Erzeugung einer Vielzahl verschiedenartiger Referenz-Schwingungssignale ausgestaltet. Dazu ist in der Speichereinheit zweckmäßigerweise für eine Anzahl, insbesondere für eine Mehrzahl, von Referenz-Schwingungssignalen jeweils ein charakteristischer Datensatz hinterlegt.

Eine besonders hohe Flexibilität beim Betrieb des Kalibriersystems ist erreichbar, indem die Ansteuereinheit in weitere vorteilhafter Ausgestaltung über einen Prozessorbaustein mit der Speichereinheit verbunden ist. Der Prozessorbaustein ist dabei insbesondere für eine besonders flexible Bearbeitung der in der Speichereinheit hinterlegten Daten geeignet, so dass auch bei vergleichsweise komprimierter Hinterlegung von Datensätzen in der Speichereinheit eine zuverlässige Umsetzung in dem jeweiligen Schwingungssignal entsprechende geeignete Ansteuersignale für die dem elektromechanischen Wandler zugeordnete Ansteuereinheit ermöglicht ist.

Zweckmäßigerweise ist der Prozessorbaustein dabei mit einer digitalen Kommunikationsschnittstelle verbunden. Auf diese Weise ist eine Anbindung des Kalibriersystems an eine zentrale Rechnereinheit und/oder an ein übergeordnetes Prüf- oder Kalibriersystem ermöglicht, so dass beispielsweise ein unmittelbarer Datenaustausch besonders erleichtert ist. Zudem ermöglicht eine derartige digitale Kommunikationsschnittstelle auch die Anbindung des Kalibriersystems an eine zugeordnete Eingabe- oder Bedieneinheit, über die vom Bedienpersonal eine vielseitige Parametrierung der Prozessabläufe im Kalibriersystem vorgebbar ist.

In alternativer oder zusätzlicher vorteilhafter Weiterbildung ist der Ansteuereinheit des Kalibriersystems eine Anzahl von Bedienelementen zugeordnet. Durch diese ist für das Bedienpersonal ein direkter Zu- oder Eingriff in die im Kalibriersystem ablaufenden Prozesse ermöglicht. Die Bedienelemente sind dabei zweckmäßigerweise mit dem Prozessorbaustein verbunden, wobei insbesondere die Signalintensität der vom elektromechanischen Wandler abgegebenen mechanischen Signale einstellbar ist. Durch eine derartige Regelbarkeit ist es ermöglicht, die vom elektromechanischen Wandler abgegebenen mechanischen Signale bedarfsweise zu verstärken oder abzuschwächen, insbesondere um unterschiedliche Signalintensitäten im Hinblick auf verschiedenartige Fehlerklassen zu testen.

Die Speichereinheit ist zweckmäßigerweise geeignet verschaltet, so dass auf geeigneten Übertragungswegen die für das jeweilige Referenz-Schwingungssignal charakteristischen Daten hinterlegbar sind. Vorteilhafterweise ist die Speichereinheit dabei, ggf. unter Zwischenschaltung geeigneter Wandler und in Ergänzung zu alternativen Übertragungssystemen, eingangsseitig mit einem analogen Aufzeichnungssystem verbunden.

Die mit der Erfindung erzielten Vorteile bestehen insbesondere darin, dass durch die Ausgestaltung des Kalibriersystems als aktives Generatorsystem zur bedarfsweisen Erzeugung der Referenz-Schwingungssignale unter Rückgriff auf in der Speichereinheit hinterlegte, für das jeweilige Referenz-Schwingungssignal charakteristische Daten eine bedarfsweise und zuverlässige Erzeugung der Referenz-Schwingungssignale ermöglicht ist, die insbesondere nicht von passiven Elementen oder Hilfselementen wie beispielsweise geeichten Prüfobjekten abhängt. Das Kalibriersystem ist somit, insbesondere durch die Speicherung der für die Referenz-Schwingungssignale charakteristischen Daten in digitaler Form, gegenüber einer Alterung unempfindlich und weist somit bei besonders einfacher Handhabung eine besonders hohe Zuverlässigkeit auf. Zudem ist bei geeigneter Hinterlegung einer Mehrzahl von Datensätzen für jeweils verschiedenartige Referenz-Schwingungssignale eine besonders große Bandbreite an geeigneten Signalen erzeugbar, die zudem auch noch hinsichtlich ihrer Intensität oder Signalstärke einstellbar gehalten werden können. Das Kalibrierungssystem ist somit auch bei der routinemäßigen Überprüfung vergleichsweise komplexer Prüfsysteme besonders flexibel einsetzbar, wobei ein vergleichsweise großes Spektrum verschiedenartiger, auch an verschiedene Qualitäts- oder Fehlerklassen angepasster Referenz-Schwingungssignale erzeugt werden kann. Durch die Speicherung von für Referenz-Schwingungssignale charakteristische Daten in einem Gerät und die Ausgabe der anhand dieser Daten erzeugten Referenz-Schwingungssignale über einen geregelten elektromechanischen Wandler, insbesondere ein Piezoelement, zum Zweck der Kalibrierung und Überprüfung der Klassifikation von vibroakustischen Prüfsystemen ist insbesondere auch auf besonders einfache Weise die Datenbasis verwendbar, die üblicherweise bereits beim erstmaligen Einrichten oder Parametrieren des Prüfsystems insgesamt gesammelt und erstellt wird. Bei einer derartigen erstmaligen Inbetriebnahme eines vibroakustischen Prüfsystems werden nämlich üblicherweise die entsprechenden Referenz-Schwingungssignale ohnehin erfasst und können dabei insbesondere auch anhand jeweils charakteristischer Datensätze in digitaler Form abgespeichert werden. Diese Ergebnisse sind im Kalibriersystem somit auf besonders einfache Weise weiter nutzbar.

Ein Ausführungsbeispiel der Erfindung wird anhand einer Zeichnung näher erläutert. Darin zeigen:
- FIG 1: schematisch ein vibroakustisches Prüfsystem mit einem zugeordneten Kalibriersystem, und
- FIG 2: schematisch ein Aufbauschema für das Kalibriersystem nach FIG 1.

Gleiche Teile sind in beiden Figuren mit denselben Bezugszeichen versehen.

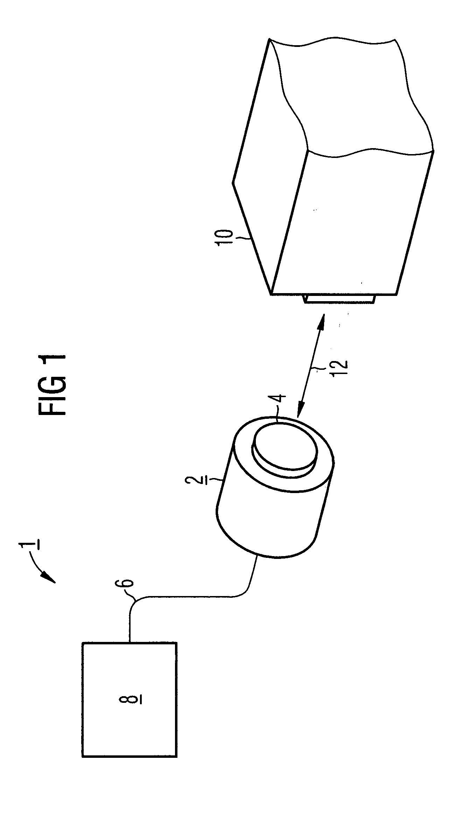

Das vibroakustische Prüfsystem 1 nach FIG 1 umfasst ein Schwingungsmesssystem 2 mit einem Messkopf 4, das über eine Anzahl von Datenleitungen 6 mit einem Auswertesystem 8 verbunden ist. Das Prüfsystem 1 ist dabei für die vibroakustische Prüfung, insbesondere im Rahmen einer Qualitätsprüfung, für eine Vielzahl von Produkten wie beispielsweise Elektromotoren ausgelegt. Bei einer derartigen Prüfung erfasst der Messkopf 4 nach Herstellung eines geeigneten Kontakts mit dem zu überprüfenden Produkt, beispielsweise durch direkten Kontakt nach Übermittlung von Körperschall oder auch nach Übermittlung von Luftschall, ein Schwingungssignal des zu untersuchenden Produkts, das insbesondere in Form der zeitlichen Abhängigkeit eines mechanischen Amplitudensignals in einem vorgegebenen Zeitintervall gegeben ist.

Nach geeigneter Umsetzung des Schwingungssignals in elektrische Daten innerhalb des Schwingungsmesssystems 2 werden diese Daten im Auswertesystem 8 einer Analyse unterzogen. Dabei wird das Schwingungssignal insbesondere auf das Vorhandensein charakteristischer Signaturen hin überprüft, aus denen auf bestimmte Qualitätseigenschaften oder vorhandene Fehler im untersuchten Produkt geschlossen werden kann. Das Prüfsystem 1 kann dabei zur Auswertung eines vom Produkt selbst erzeugten Schwingungssignals vorgesehen sein, das beispielsweise bei bewegten Teilen im Produkt und daraus resultierenden Effekten wie beispielsweise Bürstengeräusche, Lagerschaden oder ähnliche Signaturen bei der Elektromotorenprüfung durch das Produkt selbst erzeugt vorliegen kann. Alternativ kann das Prüfsystem 1 aber auch für die Untersuchung an sich passiver Produkte ausgelegt sein, wobei das Prüfsystem 1 einen nicht dargestellten Testpulsgenerator umfasst. Über diesen Testpulsgenerator wird ein akustischer Puls auf das zu untersuchende Produkt gegeben, wobei als Schwingungssignal dessen Pulsantwort in der Art eines reflektierten Signals ermittelt und ausgewertet wird.

Für eine bedarfsweise Kalibrierung des Prüfsystems 1 und insbesondere von dessen Schwingungsmesssystem 2 ist das Kalibriersystem 10 vorgesehen, das in FIG 1 lediglich andeutungsweise gezeigt ist. Das Kalibriersystem 10 wird, wie durch den Doppelpfeil 12 angedeutet, zu Überprüfungszwecken mit dem Messkopf 4 geeignet in Kontakt gebracht. Bei der Kalibrierung wird der Messkopf 4 über das Kalibriersystem 10 mit einem anhand vorgegebener Kriterien ausgewählten Referenz-Schwingungssignal beaufschlagt, wobei geprüft werden kann, ob angesichts des jeweiligen Referenz-Schwingungssignals in der Auswerteeinheit 8 die korrekte Signaturanalyse und Klassifizierung der Qualitäts- oder Fehlerklassen erfolgt.

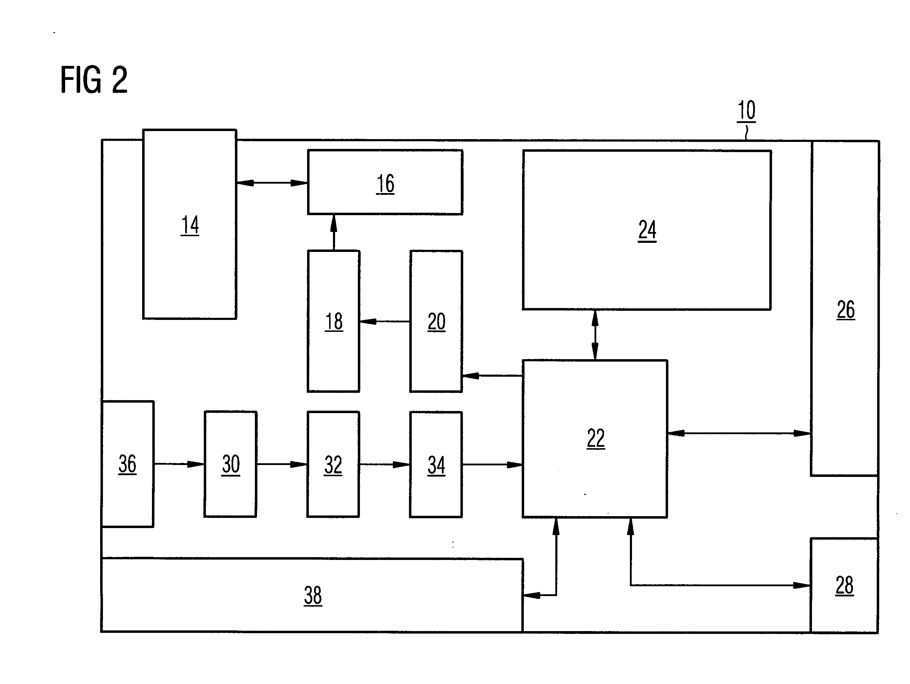

Das Kalibriersystem 10 ist in der Art eines aktiven Systems ausgestaltet, bei dem bedarfsweise zur Durchführung der Kalibrierung oder Überprüfung das jeweilige Referenz-Schwingungssignal unter Vermeidung von Rückgriffen auf passive weitere Elemente wie beispielsweise Standard-Prüfobjekten direkt und aktiv erzeugt wird. Dazu umfasst das Kalibriersystem 10, wie schematisch in FIG 2 dargestellt, einen elektromechanischen Wandler 14, der im Ausführungsbeispiel als piezoelektrisches Element ausgestaltet ist. Der elektromechanische Wandler 14 setzt dabei ein Ansteuersignal in eine Positionsänderung seiner Stirnfläche um, so dass durch geeignete Wahl der zeitlichen Abfolge der Ansteuersignale ein mechanisches Signal, insbesondere ein mechanisches Schwingungssignal, erzeugbar ist.

Dem elektromechanischen Wandler 14 ist dazu eine Ansteuereinheit 16 zugeordnet, die in Reaktion auf eingehende Stelloder Steuersignale entsprechende Ansteuerspannungen an den elektromechanischen Wandler 14 weitergibt. Die Ansteuereinheit 16 ist ihrerseits eingangsseitig unter Zwischenschaltung geeigneter Signalaufbereitungskomponenten wie einem Signalverstärker 18 und einem Digital-Analog-Wandler 20 mit einem Prozessorbaustein 22 und über diesen mit einer Speichereinheit 24 verbunden. In der Speichereinheit 24 sind dabei für eine Anzahl von Referenz-Schwingungssignalen jeweils charakteristische Datensätze hinterlegt. Bei der bedarfsweisen Erzeugung eines Referenz-Schwingungssignals ruft der Prozessorbaustein 22 die zugehörigen charakteristischen Daten aus der Speichereinheit 24 ab und erzeugt anhand dieser Daten geeignete Stellbefehle, die der Ansteuereinheit 16 zugeführt werden. Die Ansteuereinheit 16 wiederum erzeugt anhand dieser Stellbefehle geeignete Ansteuersignale für in elektromechanischen Wandler 14, der daraufhin das gewünschte Referenz-Schwingungssignal an seiner Stirnfläche erzeugt.

In der Speichereinheit 24 sind die charakteristischen Daten für eine Mehrzahl von Referenz-Schwingungssignalen hinterlegt, wobei die Referenz-Schwingungssignale insbesondere hinsichtlich der Kalibrierungsanforderungen an das jeweilige Prüfsystem 1 und insbesondere hinsichtlich der von diesem zu erfassenden spezifischen Signaturen der zu überprüfenden Produkte geeignet ausgewählt sind. Durch die Speicherung hierfür charakteristischer Datensätze in digitaler Form in der Speichereinheit 24 und die bedarfsweise Umsetzung der Datensätze in aktuell generierte Referenz-Schwingungssignale durch den Prozessorbaustein 22, die Ansteuereinheit 16 und den elektromechanischen Wandler 14 ist eine besonders hohe Flexibilität beim Einsatz des Kalibrierungssystems 10 gegeben, wobei gerade infolge der digitalen Speicherung der zugrunde liegenden Basisdaten Alterungs- oder Verschleißeffekte bei der zuverlässigen Erzeugung der Referenz-Schwingungssignale vermieden sind.

Zum Austausch von Daten, beispielsweise zur Einbringung hinterlegter Daten in ein übergeordnetes Analysesystem oder auch zur Abspeicherung neu hinzugewonnener Datensätze ist der Prozessorbaustein 22 mit einer Anzahl von digitalen Ein- und Ausgängen 26 sowie mit einer Kommunikationsschnittstelle 28 verbunden. Darüber sind dem Prozessorbaustein 22 beispielsweise neue charakteristische Datensätze zuführbar, die bedarfsweise in der Speichereinheit 24 abgelegt werden können. Zusätzlich ist der Prozessorbaustein 22 aber auch über einen Signalvorverstärker 30, einen Tiefpassfilter 32 und einen Analog-Digital-Wandler 34 mit einem Analogeingang 36 verbunden. Der Analogeingang 36, der beispielsweise in der Art eines analogen Aufzeichnungssystems oder eines Mikrofons ausgestaltet sein kann, ermöglicht dabei die direkte Erfassung akustischer Signale, die anschließend im Prozessorbaustein 22 einer Aufbereitung und Analyse unterzogen werden können, wobei daraus gewonnene charakteristische Datensätze ebenfalls auf der Speichereinheit 24 abgelegt werden können.

Unter Zwischenschaltung der Prozessoreinheit 22 ist der Ansteuereinheit 16 eine Anzahl von Bedienelementen 38 zugeordnet, über die charakteristische Betriebsparameter des Kalibriersystems 10 wie beispielsweise die vom elektromechanischen Wandler 14 erzeugte Signalintensität eingestellt werden können. Alternativ ist für das Bedienpersonal eine derartige Einflussnahme auf die Betriebsparameter des Kalibriersystems 10 aber auch unter Ausnutzung der digitalen Ein- und Ausgänge 26 und/oder der Kommunikationsschnittstelle 28 über ein zugeordnetes Computer- oder Leitsystem möglich.

Im Kalibriersystem 10 sind die Referenz-Schwingungssignale in Form der charakteristischen Datensätze in digitaler Form in der Speichereinheit 24 gespeichert. Da diese Daten üblicherweise beim erstmaligen Inbetriebnehmen des Prüfsystems 1 ermittelt werden, liegen diese bereits frühzeitig und ohne weiteren Aufwand in geeigneter digitaler Form vor und können somit im Kalibriersystem 10 weitergenutzt werden. Durch die Vielzahl der in der Speichereinheit 24 hinterlegbaren charakteristischen Datensätze ist das Kalibriersystem 10 besonders flexibel einsetzbar, wobei die gespeicherten Referenzsignale keine Alterung und keinem Verschleiß unterliegen, so dass jederzeit ein exaktes Schwingungsbild erzeugt werden kann.

Zusammenfassend betrifft die Erfindung ein insbesondere für ein Schwingungsmesssystem 2 eines vibroakustischen Prüfsystems 1 geeignetes Kalibriersystem 10, das mit geringem Aufwand bei hoher Genauigkeit eine zuverlässige Kalibrierung auch bei variierenden Prüfbedingungen ermöglicht. Dazu weist das Kalibriersystem 10 erfindungsgemäß einen elektromechanischen Wandler 14 auf, wobei eine diesem zugeordnete Ansteuereinheit 16 eingangsseitig mit einer Speichereinheit 24 verbunden ist.

## Patentansprüche

1. Kalibriersystem (10), insbesondere für ein Schwingungsmesssystem (2), mit einem elektromechanischen Wandler (14), wobei eine diesem zugeordnete Ansteuereinheit (16) eingangsseitig mit einer Speichereinheit (24) verbunden ist.

2. Kalibriersystem (10) nach Anspruch 1, dessen elektromechanischer Wandler (14) als piezoelektrisches Element ausgestaltet ist.

3. Kalibriersystem (10) nach Anspruch 1 oder 2, in dessen Speichereinheit (24) für eine Anzahl von Referenz-Schwingungsspektren jeweils ein charakteristischer Datensatz hinterlegt ist.

4. Kalibriersystem (10) nach einem der Ansprüche 1 bis 3, dessen Ansteuereinheit (16) über einen Prozessorbaustein (22) mit der Speichereinheit (24) verbunden ist.

5. Kalibriersystem (10) nach Anspruch 4, bei dem der Prozessorbaustein (22) mit einer digitalen Kommunikationsschnittstelle (28) verbunden ist.

6. Kalibriersystem (10) nach einem der Ansprüche 1 bis 5, dessen Ansteuereinheit (16) eine Anzahl von Bedienelementen (38) zugeordnet ist.

7. Kalibriersystem (10) nach einem der Ansprüche 1 bis 6, dessen Speichereinheit (16) eingangsseitig mit einem Analogeingang (36) verbunden ist.
